(19) Europäisches Patentamt
European Patent Office
Office européen des brevets

(11) **EP 2 530 277 B1**

(12) **EUROPEAN PATENT SPECIFICATION**

(45) Date of publication and mention
of the grant of the patent:
**12.10.2016 Bulletin 2016/41**

(51) Int Cl.:
*F02B 63/04* (2006.01)    *F02B 75/06* (2006.01)
*B60K 6/10* (2006.01)    *F16F 15/10* (2006.01)

(21) Application number: **12170718.6**

(22) Date of filing: **04.06.2012**

(54) **Motogenerator**

Motorgenerator

Générateur de moteur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.06.2011 IT PD20110182**

(43) Date of publication of application:
**05.12.2012 Bulletin 2012/49**

(73) Proprietor: **Mecaprom Technologies Corporation
Italia S.r.l.**
**24121 Bergamo (IT)**

(72) Inventor: **Regis, Fabrizio**
**I-10020 Casalborgone (TO) (IT)**

(74) Representative: **Gallo, Luca et al**
**Gallo & Partners S.r.l.**
**Via Rezzonico, 6**
**35131 Padova (IT)**

(56) References cited:
**GB-A- 814 928        GB-A- 2 328 476
US-B1- 6 405 701**

- **Dante Giacosa: "Motori Endotermici", 31
  December 2000 (2000-12-31), HOEPLI EDITORE,
  Milano, XP002668100, ISBN: 8820326337 * Il
  Volano; page 231 - page 233 ***
- **Anonymous:
  "Datei:Drehungleichfoermigkeit.jpg", Wikipedia,
  der freien Enzyklopädie , 3 November 2004
  (2004-11-03), pages 1-3, XP002668101, Retrieved
  from the Internet:
  URL:http://de.wikipedia.org/w/index.php?ti
  tle=Datei:Drehungleichfoermigkeit.jpg&file
  timestamp=20041103184711 [retrieved on
  2012-01-25]**
- **"B U R E A U O F I N D I A N S T A N D A R D S
  METHODS OF TESTS FOR INTERNAL
  COMBUSTION ENGINES PART VII GOVERNING
  TESTS FOR CONSTANT SPEED ENGINES AND
  SELECTION OF ENGINES FOR USE WITH
  ELECTRICAL GENERATORS", EDC EDC, 30
  October 1980 (1980-10-30), pages 3-14,
  XP055148118, Retrieved from the Internet:
  URL:http://cfmtti.dacnet.nic.in/Indian
  Standard-10000/10000_7.pdf [retrieved on
  2014-10-21]**

Remarks:
The file contains technical information submitted after
the application was filed and not included in this
specification

## Description

Field of application

The present invention concerns a motor generator according to the preamble of the independent claim.
The present motor generator is intended to be advantageously employed in vehicles with hybrid propulsion, intended for movement both in urban and extraurban settings. In particular, the present motor generator is preferably intended to be installed on board hybrid propulsion vehicles according to the series hybrid scheme.
The invention is therefore situated in the field of the automobile industry and in particular in the field of production of vehicles with mixed electric and combustion propulsion.

State of the art

Today, there is the particular need to limit the pollution produced by motorized transport means, especially in their use in urban areas.
In order to attain such objective of limiting polluting emissions, automobile production companies have introduced so-called hybrid propulsion vehicles on the market, i.e. vehicles provided with at least two different types of power generators useful for propulsion, typically including an electric motor and an endothermic engine.
The electrical energy necessary for the propulsion by means of electric motor can be stored as a non-limiting example in storage groups based on lithium chemistry (lithium-ions, lithium-polymers) or in supercapacitors.
As will be explained below, these known hybrid propulsion vehicles are geared to combine both the advantages of internal combustion engines and those of electric motors, in order to reduce the polluting emissions while offering performances and functioning autonomy that are competitive with respect to conventional motor vehicles exclusively moved by internal combustion engines.
In particular, the internal combustion engine has the advantage of transforming the chemical energy of the fuel, which can be easily supplied with rather high efficiency by the existing widespread refueling network.
However, with respect to an electric motor, the functioning of an internal combustion engine has high environmental impact, both in terms of gas emissions and acoustic emissions, particularly when employed in highly dynamic conditions, i.e. in conditions of use in which both the rotational speed of the internal combustion engine and the drive torque required for driving the vehicle are highly variable.
The electric motor, on the other hand, has the advantage of converting the electrical energy into mechanical energy with greater efficiency and functioning versatility than the internal combustion engine; however, it has the drawback that it can arrange only a small quantity of energy on board the vehicle, and currently such energy cannot be as easily and quickly supplied as the fossil fuels (gas, diesel, LPG, methane etc.).
The hybrid propulsion vehicles currently available on the market mainly employ two different hybrid propulsion configurations, known as series hybrid and parallel hybrid. In the parallel hybrid configuration, the propulsion group includes the endothermic engine and a transmission device as well as a reversible electric machine, which during vehicle use alternately functions as a motor for driving the vehicle or as a generator for recharging the storage groups.
Therefore, the drive torque is mainly produced by the endothermic engine, with assistance from the electric propulsion machine when it is actuated as a motor.
In the (extended range) series hybrid configuration, the propulsion group usually comprises at least one reversible electric propulsion machine, connected to the drive system, and a motor generator adapted to generate electrical energy that can be selectively intended to power supply the electric propulsion machine or to charge the storage groups.
The motor generator comprises an internal combustion engine and an electric generator mechanically coupled to the internal combustion engine in order to be actuated.
The electric current generated by the electric generator actuated by the internal combustion engine is selectively transferred to the electric propulsion machine, in order to actuate it, or to the provided energy storage groups, in order to be stored. Unlike the propulsion vehicles with endothermic engine and those with hybrid propulsion of parallel hybrid type, the internal combustion engine of a conventional motor generator installed in a hybrid propulsion vehicle of series hybrid type is intended (in a substantially exclusive manner) to actuate the electric generator in order to produce electrical energy mainly intended to be stored by the storage groups.
In the hybrid propulsion vehicles of series hybrid type, the propulsion is exclusively actuated by the electric propulsion machine, which generally receives energy from the storage groups and possibly also directly from the electric generator.
Today, there is a particular need to provide a motor generator that is compact, light and silent, and which in particular has high efficiency.
It is known from document US 6,405,701 a motor generator comprising a combustion engine (in particular a four cylinder engine) which is mechanically connected by means of a drive train to the drive wheels of a vehicle, and is able to produce a variable torque for driving the wheels as a function of the different advancing conditions of the vehicle.
The motor generator, furthermore, comprises an electric machine coupled with the drive shaft of the combustion engine and actuated by a control unit, such that the electric machine generates a rapidly varying torque to reduce the rotational nonuniformities of the engine and assists the propelling action of the engine superimposing a further torque to the driving torque of the engine itself.

A drawback of the motor generator described in US 6,405,701 is due to the fact that the combustion engine, that directly controls the drive wheels, has a low efficiency because it has to vary frequently and rapidly its rotational speed for driving the wheels during the different advancing conditions of the vehicle.

Furthermore, the electric machine, applying a superimposing varying torque on the shaft of the engine, is not able to low vibration level in a satisfactory way.

It is known from document GB 2328476 a motor generator for a hybrid vehicle comprising a two cylinder engine which is mechanically connected to an electric generator for actuating the latter to produce electric power.

Furthermore, the motor generator comprises a control unit that is connected to the electric generator and is able to direct the electric power (supplied by the electric generator) to storage batteries or to four electric motors which drive the corresponding wheels of the vehicle.

More in detail, when the electric motors demand more electric power than the electric power provided by the electric generator, the batteries can supply the necessary additional electric power. Furthermore, any excess of electric power supplied by the electric generator can be used to charge the storage batteries.

A drawback of the motor generator described in GB 2328476 is due to the fact that it is not able to obtain a high efficiency with an optimized low vibration level.

Another drawback of the motor generator described in GB 2328476 is due to the fact that it is relatively bulky.

Presentation of the invention

In this situation, the problem underlying the present invention is that of meeting the described need by providing a motor generator which has a high functioning efficiency. In the scope of such task, one object of the present invention consists of proposing a motor generator that during functioning has lower noise and vibration levels than those of motor generators known today.

Another object of the present invention is to propose a motor generator that has a flexible structure, i.e. which allows the arrangement of its components in different locations in accordance with installation needs, particularly in the engine space of hybrid propulsion vehicles.

Another object of the present invention is to propose a motor generator that allows a flexible use of the internal combustion engine and the electric generator, in particular allowing the use thereof for actuating the driving of a hybrid propulsion vehicle.

This task, as well as these and other objects which be clearer below, are achieved by a motor generator for hybrid propulsion vehicles according to the below-reported claims.

Brief description of the drawings

The technical characteristics of the finding, according to the proposed task and objects, can be clearly found in the contents of the below-reported claims, and the advantages of the same will be more evident in the detailed description of an embodiment of a motor generator according to the invention, illustrated as a non-limiting example in the enclosed drawing set in which:

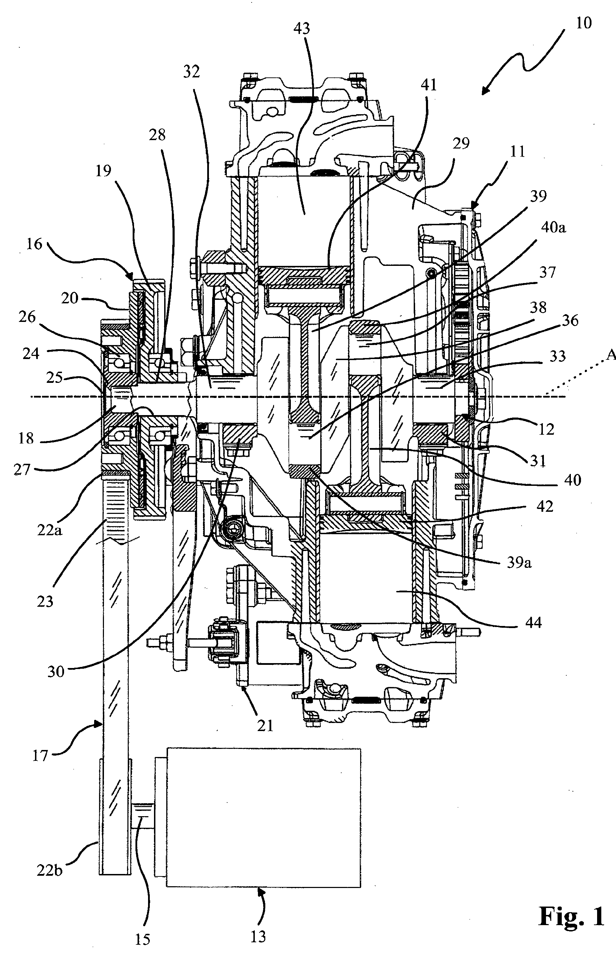

- Figure 1 illustrates a motor generator, according to the present invention, partially in section and partly schematized.

Detailed description of a preferred embodiment

With reference to the drawing set, a motor generator is indicated overall with 10; such motor generator comprises an internal combustion engine 11 having a drive shaft 12 and connected to an electric generator 13 by means of mechanical transmission means 14.

The electric generator 13 is preferably a reversible electric motor which thus can be selectively actuated by the internal combustion engine 11 as an electric generator, or it can be actuated as a motor, e.g. for actuating the starting of the internal combustion engine 11.

In addition, the electric generator 13 suitably has a rotor 15 which is mechanically connected to the drive shaft 12 via the mechanical transmission means 14.

In particular, the mechanical transmission means 14 advantageously comprise a clutch unit 16 and a transmission 17.

The clutch unit 16 is mechanically associated to an end section 18 of the drive shaft 12. The transmission 17, which is preferably a belt transmission, suitably interconnects the clutch unit 16 to the rotor 15 of the electric generator 13.

More in detail, the clutch unit 16 is advantageously provided with a drive plate 19 and with a driven plate 20, both mounted on the end section 18 of the drive shaft 12, as is more extensively described below.

Unlike the clutch units of conventional use in the automobile field, which have a drive plate borne by a drive shaft and a driven plate borne by a driven shaft, the clutch unit 16 has the particular feature of having both the plates 19 and 20 borne by the drive shaft 12, and in particular borne by the end section 18 of the drive shaft 12 which is suitably projectingly extended from the body 11a of the internal combustion engine 11. In this manner, the clutch unit 16 is advantageously exclusively borne by the internal combustion engine 11.

Hence, the motor generator 14 can be positioned with respect to the internal combustion engine 11 with greater flexibility than that of conventional motor generators.

Indeed, the motor generator 14 is not constrained to collaborate with the internal combustion engine 11 to support the clutch unit 16, for example bearing the driven plate 20 thereof, as instead occurs for the gear shift groups in the current automobile field technique.

The clutch groups conventionally employed in the automobile field indeed have a driven plate borne by a driven shaft, of the gear shift group, and a drive plate borne by the drive shaft of the internal combustion engine, which thus collaborates with the gear shift group to bear the clutch unit.

In addition, the clutch unit 16 is provided with actuation means 21 acting on the drive plate 19 in order to couple it to the driven plate 20, for the transmission of a drive torque between these.

Suitably, the drive plate 19 is coupled to the end section 18 in a slidable manner in the direction of the rotation axis A of the drive shaft 12.

In addition, the drive plate 19 is suitably borne by the end section 18 of the drive shaft 12 in a position facing the driven plate 20.

In such a manner, the drive plate 19 is reversibly slidable along the end section 18 so as to selectively thrust against the driven plate 20, in order to transmit torque to the electric generator 13, or instead to be moved away from the driven plate 20 in order to uncouple the internal combustion engine 11 from the electric generator 13. Advantageously, the driven plate 20 is rotatably coupled to the end section 18 of the drive shaft 12 facing the drive plate 19 and susceptible of rotating around the rotation axis A.

In addition, the driven plate 20 is suitably and mechanically connected to the rotor 15 of the electric generator 13 for the transmission of a drive torque, conveniently by means of the transmission 17.

More in detail, advantageously, the transmission 17 comprises a first pulley 22a integral with the driven plate 20, a second pulley 22b integral with the rotor 15 and a belt 23 closed in a ring, partially wound on the pulleys 22a and 22b and stretched between these in order to transmit drive torque between the pulleys 22a and 22b.

Conveniently, the actuation means 21 are mechanically connected to the drive plate 19 to operate the sliding thereof on the end section 18 along the rotation axis A between a first position and a second position, as explained below.

In the first position, the drive plate 19 is coupled in abutment against the driven plate 20, for the integral rotation thereof around the rotation axis A and the transmission of drive torque between the plates 19 and 20.

Instead, in the second position, the drive plate 19 is spaced from the driven plate 20, for the free mutual rotation thereof, as a non-limiting example illustrated in figure 1.

In such second position, therefore, the drive plate 19 during the functioning of the internal combustion engine 11 rotates integrally with the drive shaft 12, whereas the driven plate 20 is idle with respect to the drive plate 19 and thus with respect to the drive shaft 12.

In more detail, the motor generator 10 advantageously has a support bushing 24 for the driven plate 20, fit on the end section 18 of the drive shaft 12 and suitably rigidly fixed thereto by means of a screw 25.

Conveniently, the driven plate 20 is mounted on the bushing 24, with respect to which it is in a free rotation relationship around the rotation axis A.

Preferably, at least one bearing 26, suitably of rolling type, interconnects the driven plate 20 with the bushing 24 to define therewith said free rotation relationship around the rotation axis A.

The bearing 26 conveniently interconnects the bushing 24 to the driven plate 20, in order to allow the idle rotation of the driven plate 20 on the bushing 24.

In addition, the end section 18 of the drive shaft 12 advantageously has a grooved section 27.

Correspondingly, the drive plate 19 suitably has a toothed hole 28 adapted to the grooved section 27, with which it is coupled in a sliding relationship along the end section 18, along the direction of the rotation axis A.

In such a manner, the drive plate 19 can slide along the grooved section 27 of the drive shaft 12 from the first position to the second position and vice versa, but it is integrally constrained to the drive shaft 12 around the rotation axis A.

Thus, when the drive shaft 12 is in rotation around the rotation axis A, it drives in rotation therewith the drive plate 19 and with this the driven plate when the plates 19 and 20 are coupled together, in order to transmit a drive torque between the internal combustion engine 11 and the motor generator 14.

Continuing now in the description of the internal combustion engine 11, according to the present invention, a particular feature of the motor generator 10 consists of the fact that the internal combustion engine 11 is a two-cylinder boxer engine, preferably with controlled ignition, and has rotating inertial masses having polar moments of inertia adapted to give the internal combustion engine 11 a cyclic irregularity $\delta$ substantially ranging from 0.031 to 0.033 at a rotational speed substantially ranging from 2800 rpm to 3200 rpm.

Preferably, the motor generator 10 has rotating inertial masses having polar moments of inertia adapted to give the internal combustion engine 11 a cyclic irregularity $\delta$ substantially equal to 0.032 at a rotational speed substantially equal to 3000 rpm.

By cyclic irregularity $\delta$, it is intended the ratio between the difference between the maximum value $\omega_{max}$ and the minimum value $\omega_{min}$ of the instantaneous angular speed of the drive shaft 12 and the average angular speed $\omega_{med}$ of the drive shaft 12, i.e. in formula:

$$\delta = (\omega_{max} - \omega_{min}) / \omega_{med}$$

The average angular speed $\omega_{med}$ is given by the arithmetic mean between the maximum value $\omega_{max}$ and the minimum value $\omega_{min}$ of the instantaneous angular speed of the drive shaft 12.

In an alternative equation of the cyclic irregularity $\delta$, this is given by the formula:

$$\delta = \Delta L(\alpha)_{max} / (I_T \cdot \omega_{med}^2)$$

where $\Delta L(\alpha)_{max}$ is the value of the excess total work, expressed in N·m·rad; and $I_T$ is the total polar moment of inertia of the motor generator 10, expressed in Kg·m$^2$.

The internal combustion engine 11, due to its low cyclic irregularity $\delta$, has a high stability that allows the use thereof at a substantially fixed rotational speed equal to about 3000 rpm, at which the internal combustion engine 11 has reduced losses due to mechanical friction and thus high mechanical efficiency and lower specific consumption, to the advantage of its economical functioning.

Today, in current technique, the conventional boxer engines employed in the automobile and motorcycle fields are exclusively intended for driving the vehicle.

The boxer engines known today therefore have a sizing of the rotating inertial masses aimed to obtain a polar moment of inertia of the rotating inertial masses that is as low as possible with respect to the rotation axis of the drive shaft, in order to allow the internal combustion engine to quickly change the rotational speed as a function of the required use conditions.

For such reason, in the current motorcycle technique for a conventional boxer engine, with piston displacement substantially equal to 500 cc, a cyclic irregularity value equal to 0.032 at 3000 rpm is not acceptable - since this involves a total polar inertia of the rotating masses of the engine that is incompatible for allowing the quick rotational speed shift required during functioning (for the propulsion of a vehicle).

In particular, the ratio between the polar moment of inertia of the drive shaft 12 of the internal combustion engine 11 and the piston displacement of the internal combustion engine 11 advantageously is substantially equal to 0.0056 Kg·m$^2$/l.

In addition, the motor generator 10 preferably has a ratio between total polar moment of inertia $I_T$ and the piston displacement of the internal combustion engine 11 ranging from 0.16 Kg·m$^2$/l to 0.20 Kg·m$^2$/l, the total polar moment of inertia being given by the sum of the polar moment of inertia of the drive shaft 12 summed with the polar moment of inertia of the mechanical transmission means 14 and summed with the polar moment of inertia of the rotor 15 of said electric generator 13.

Suitably, the internal combustion engine 11 has a piston displacement substantially ranging from 400 cc to 500 cc and preferably equal to 450 cc.

The motor generator 10 advantageously has a total polar moment of inertia $I_T$ substantially ranging from 0.075 Kg·m$^2$ to 0.092 Kg·m$^2$ and preferably equal to 0.0836 Kg·m$^2$.

A motor generator 10 according to the present invention, given the same required power, can have more compact height with respect to motor generators known today, and thus can be easily housable even in the engine spaces of city cars.

In particular, the internal combustion engine 11 has a specific torque substantially ranging from 80 N·m/l to 100 N·m/l and advantageously equal to 100 N·m/l.

In more detail, the internal combustion engine 11 has a base 29 which advantageously has two supports 30 and 31 for the drive shaft 12.

The drive shaft 12 suitably has two support sections 32 and 33 adapted to engage the two supports 30 and 31 in a free rotation relationship.

In addition, the drive shaft 12 advantageously has two cranks 34 and 35 equipped with corresponding crank pins 36 and 37 interconnected by an arm 38.

The internal combustion engine 11, being a boxer engine, has the crank pins 36 and 37 which have a mutual angular spacing, along the rotation axis A, equal to 180°.

The internal combustion engine 11 advantageously also comprises two connecting rods 39 and 40 and two pistons 41 and 42 which slide in two cylinders 43 and 44.

The pistons 41 and 42 are mechanically connected to the drive shaft 12 by means of the connecting rods 39 and 40.

The combustion engine 11 advantageously has a preferred rotational speed substantially equal to 3000 rpm.

The functioning of the internal combustion engine 11 at said preferred speed causes relatively reduced dynamic stresses between the drive shaft 12 and the connecting rods 39 and 40, allowing the obtainment of the connecting rods 39 and 40 in a light metal material, advantageously made of aluminum, and also avoiding the use - today widespread in known boxer engines - of bushings to be inserted between the crank pins 36 and 37 and the heads 39a and 40a of the corresponding connecting rods 39 and 40. Current boxer engines employed in the automobile and motorcycle fields and intended to develop high power levels at high speeds, e.g. greater than 5500 rpm, generally have the connecting rods made of steel and coupled to the crank pins with the interposition of bushings adapted to prevent the direct metal contact between the heads of the connecting rods and the crank pins.

In addition, the internal combustion engine 11 preferably has a ratio between the piston stroke 41 and 42 and the cylinder bore 43 and 44 substantially equal to 1.

In this manner, the internal combustion engine 11 results compact, to the advantage of its facilitated housability in an engine space, even one with reduced volume.

The motor generator 10, due to the fact that the internal combustion engine 11 is a boxer engine, is particularly adapted for being housed in the narrow engine spaces of hybrid propulsion vehicles of small size, conventionally known as city cars.

In particular, the city cars indeed have narrow engine spaces that are mainly vertically extended.

The internal combustion engine 11 allows being housed in the engine space of a city car, in a manner so as to have a much lower vertical bulk than that of the motor generators known today.

Indeed, it is possible to arrange the internal combustion engine 11 in a horizontal position, i.e. in a manner that has the axis of the cylinders 43 and 44 and the rotation axis A of the drive shaft 12 substantially lying on a horizontal plane.

In such horizontal position, the internal combustion engine has the minimum bulk in the vertical direction, much less than that of conventional motor generators.

The motor generator 10, due to the fact that it is provided with the transmission 17, also allows placing the electric generator 13 in a non-aligned position with respect to the internal combustion engine 11.

For example, the electric generator 13 can be placed under the internal combustion engine 11, possibly on the same axis as the electric propulsion machine of the vehicle. A motor generator 10 according to the present invention also allows employing the electric generator 13, which suitably is a reversible electric motor, as drive motor of the vehicle in collaboration with the electric propulsion machine.

For such purpose, for example, an auxiliary transmission can be provided, not illustrated in the enclosed figures, interconnecting on command the rotor 15 of the electric generator 13 with the rotor of the electric propulsion machine of the vehicle, which is coupled to the drive system of the vehicle.

In such a manner, the clutch unit 16 can be actuated to uncouple the internal combustion engine 11 from the electric generator 13.

At the same time, by coupling the electric generator 13 to the rotor of the electric propulsion machine via the auxiliary transmission, and by power supplying the electric generator 13 in order to actuate it as a motor, the electric generator 13 and the electric propulsion machine cooperate in driving the vehicle.

The motor generator 10 also allows employing the internal combustion engine 11 for propelling a hybrid propulsion vehicle, in an emergency situation in which the electric propulsion machine is not functioning.

Indeed, if for example the electric propulsion machine is not functioning, in order to allow the propulsion of the vehicle by the internal combustion engine 11, it is possible to mechanically connect the drive system of the vehicle to the internal combustion engine 11.

For such purpose, the auxiliary transmission and the clutch unit 16 are controlled in a manner so as to allow the transmission of torque between the drive shaft 12 and the drive system of the vehicle.

Advantageously, in such emergency situation, in order to start the motion of the vehicle, the clutch unit 16 is controlled in a manner so as to modulate the torque transmission between the internal combustion engine 11 and the drive system.

It has been established in practice that a motor generator according to the present invention attains the preset task and objects, having a high efficiency at its preferred functioning speed of 3000 rpm.

In addition, a motor generator according to the present invention has a lower vibration level with respect to the conventional motor generators, due to the dynamic equilibrium that it is given by having the internal combustion engine that is a boxer engine with low cyclic irregularity.

A motor generator according to the present invention, due to the belt transmission, has a flexible structure, i.e. it allows arranging the electric generator non-aligned with respect to the internal combustion engine and in particular flanked thereto in a position suitable for the contingent installation requirements of the motor generator, especially in the engine space of a hybrid propulsion vehicle.

A motor generator according to the present invention, due to the clutch group that allows coupling or uncoupling on command the internal combustion engine and the electric generator, allows a flexible use of the internal combustion engine and the electric generator, in particular allowing their use for actuating the driving of a hybrid propulsion vehicle.

Of course, in the practical achievement thereof, a motor generator according to the present invention can also assume forms and configurations that are different from that described above and illustrated in the enclosed drawing tables, without departing from the present protective scope.

In addition, all details can be substituted by technically equivalent elements, and the size, shapes and materials used can be of any type according to the contingent needs, provided that they are compatible with the specific object.

**Claims**

1. Motor generator, intended to be installed on board hybrid propulsion vehicles according to the series hybrid scheme, comprising:

   - an internal combustion engine (11), which is provided with a drive shaft (12) and is a two-cylinder boxer engine;
   - an electric generator (13) having a rotor (15), which is mechanically connected through mechanical transmission means (14) to the drive shaft (12) of said internal combustion engine (11), and it can be rotationally actuated by said drive shaft (12);

whereby said internal combustion engine (11) has a cyclic irregularity substantially ranging from 0.031 to 0.033 with:

- at a rotational speed substantially ranging from 2800 rpm to 3200 rpm;
- a rotating inertial masses having a total polar moment of inertia ($I_T$), obtained by the sum of the polar moment of inertia of said drive shaft (12); the polar moment of inertia of said mechanical transmission means (14); and the polar moment of inertia of the rotor (15) of said electric generator (13); substantially ranging from 0.075 Kg·m$^2$ to 0.092 Kg·m$^2$ and preferably equal to 0.0836 Kg·m$^2$; and

the mechanical transmission means (14) comprise a clutch unit (16) and a transmission (17).

2. Motor generator according to claim 1, **characterized in that** said internal combustion engine (11) has a cyclic irregularity substantially equal to 0.032 with a rotational speed substantially equal to 3000 rpm.

3. Motor generator according to any one of the preceding claims, **characterized in that** said internal combustion engine (11) has a ratio between the piston stroke and the cylinder bore substantially equal to 1.

4. Motor generator according to any one of the preceding claims, **characterized in that** said internal combustion engine (11) has a percentage pin overlap ratio substantially lower than 5%.

5. Motor generator according to any one of the preceding claims, **characterized in that** said internal combustion engine (11) has a piston displacement ranging from 400 cc to 500 cc.

6. Motor generator according to any one of the preceding claims, **characterized in that** the ratio between the polar moment of inertia of the drive shaft (12) of said combustion engine and the piston displacement of said internal combustion engine (11) is substantially equal to 0.0056 Kg·m$^2$/l.

7. Motor generator according to any one of the preceding claims, **characterized in that** it has a total polar moment of inertia substantially equal to 0.0836 Kg·m$^2$.

8. Motor generator (10), according to any one of the preceding claims, **characterized in that** said clutch unit (16) is provided with:

- a drive plate (19) mounted on an end section (18) of said drive shaft (12) and susceptible of sliding along said end section (18) along the rotation axis (A) of said drive shaft (12),
- a driven plate (20) mounted on the end section (18) of said drive shaft (12) facing said drive plate (19), susceptible of rotating around said drive shaft (12) and mechanically connected to the rotor (15) of said electric generator (14) for transmitting said drive torque,
- actuation means (21) mechanically acting on said drive plate (19), to operate the sliding thereof along the end section (18) of said drive shaft (12)

between a first position in which said drive plate (19) is coupled to said driven plate (20), for the integral rotation thereof around said rotation axis (A); and a second position in which said drive plate (19) is spaced from said driven plate (20), for the free mutual rotation thereof.

## Patentansprüche

1. Motorgenerator zur Installation an Bord von Fahrzeugen mit Hybridantrieb gemäß dem Hybridplan der Serienfertigung, der Folgendes umfasst:

- einen mit einer Antriebswelle (12) ausgestatteten Verbrennungsmotor (11), bei dem es sich um einen Zweizylinder-Boxermotor handelt;
- einen Stromerzeuger (13) mit einem Rotor (15), der mechanisch über mechanische Übertragungselemente (14) mit der Antriebswelle (12) des genannten Verbrennungsmotors (11) verbunden ist und von der genannten Antriebswelle (12) in Drehung versetzt werden kann;

wobei der genannte Verbrennungsmotor (11) eine zyklische Unregelmäßigkeit von 0,031 bis 0,033 und außerdem Folgendes aufweist:

- eine Drehzahl von im Wesentlichen 2800 rpm bis 3200 rpm;
- eine drehende Trägheitsmasse mit einem insgesamten polaren Trägheitsmoment ($I_T$), das sich aus der Summe des polaren Trägheitsmoments der genannten Antriebswelle (12) ergibt; wobei das polare Trägheitsmoment der genannten mechanischen Übertragungselemente (14) und das polare Trägheitsmoment des Rotors (15) des genannten Stromerzeugers (13) im Wesentlichen zwischen 0,075 kg m$^2$ und 0.092 kg m$^2$ liegen und vorzugsweise 0,0836 kg m$^2$ entsprechen und

die mechanischen Übertragungselemente (14) eine Kupplungseinheit (16) und ein Getriebe (17) umfassen.

**2.** Motorgenerator nach Anspruch 1, **dadurch gekennzeichnet, dass** der genannte Verbrennungsmotor (11) eine zyklische Unregelmäßigkeit von im Wesentlichen 0,032 bei einer Drehzahl von im Wesentlichen 3000 rpm aufweist.

**3.** Motorgenerator nach einem beliebigen der vorangegangenen Ansprüche, **dadurch gekennzeichnet, dass** der genannte Verbrennungsmotor (11) ein Verhältnis zwischen Kolbenhub und Zylinderbohrung von im Wesentlichen 1 aufweist.

**4.** Motorgenerator nach einem beliebigen der vorangegangenen Ansprüche, **dadurch gekennzeichnet, dass** der genannte Verbrennungsmotor (11) eine Zapfenüberlagerung von im Wesentlichen weniger als 5 % aufweist.

**5.** Motorgenerator nach einem beliebigen der vorangegangenen Ansprüche, **dadurch gekennzeichnet, dass** der genannte Verbrennungsmotor (11) einen Hubraum zwischen 400 cc und 500 cc aufweist.

**6.** Motorgenerator nach einem beliebigen der vorangegangenen Ansprüche, **dadurch gekennzeichnet, dass** das Verhältnis zwischen dem polaren Trägheitsmoment der Antriebswelle (12) des genannten Verbrennungsmotors und dem Hubraum des genannten Verbrennungsmotors (11) im Wesentlichen 0,0056 kg m2/l entspricht.

**7.** Motorgenerator nach einem beliebigen der vorangegangenen Ansprüche, **dadurch gekennzeichnet, dass** er ein polares Trägheitsmoment von im Wesentlichen 0,0836 kg m2 aufweist.

**8.** Motorgenerator (10) nach einem beliebigen der vorangegangenen Ansprüche, **dadurch gekennzeichnet, dass** die genannte Kupplungseinheit (16) Folgendes umfasst:

- eine auf einem Endabschnitt (18) der genannten Antriebswelle (12) montierte Antriebsscheibe (19), die geeignet ist, entlang der Drehachse (A) der genannten Antriebswelle (12) entlang des genannten Endabschnitts (18) zu gleiten,
- eine auf dem Endabschnitt (18) der genannten Antriebswelle (12) montierte Abtriebsscheibe (20), die der genannten Antriebsscheibe (19) gegenüberliegt und geeignet ist, um die genannte Antriebswelle (12) zu drehen und mechanisch mit dem Rotor (15) des genannten Stromerzeugers (14) verbunden ist, um das genannte Antriebsmoment zu übertragen,
- mechanisch auf die genannte Antriebsscheibe (19) wirkende Betätigungsmittel (21) für das Gleiten derselben entlang des Endabschnitts (18) der genannten Antriebswelle (12) zwischen einer ersten Position, in der die genannte Antriebsscheibe (19) mit der genannten Abtriebsscheibe (20) verbunden ist, damit diese vollständig um die genannte Drehachse (A) drehen kann,

und

einer zweiten Position, in der sich die genannte Antriebsscheibe (19) von der genannten Abtriebsscheibe (20) im Abstand befindet, damit diese frei gegeneinander drehen können.

**Revendications**

**1.** Générateur de moteur, conçu pour être installé sur des véhicules à propulsion hybride conformément au procédé hybride en série, comprenant :

- un moteur à combustion interne (11), qui est équipé d'un arbre de transmission (12) et qui est constitué d'un moteur 2 cylindres à plat ;
- un générateur électrique (13) équipé d'un rotor (15) qui est relié mécaniquement par une transmission mécanique (14) à l'arbre de transmission (12) du moteur à combustion interne précité (11), et sa rotation peut être entrainée par l'arbre de transmission précité (12) ; par quoi le moteur à combustion interne (11) présente une irrégularité cyclique substantielle allant de 0,031 à 0,033 avec :

• à une vitesse de rotation allant substantiellement de 2 800 rpm à 3 200 rpm ;
• une masse d'inertie de rotation ayant un moment d'inertie polaire total (h), obtenu par la somme du moment d'inertie polaire de l'arbre de transmission précité (12) ; le moment d'inertie polaire des moyens de transmission mécanique précités (14) ; et le moment polaire d'inertie du rotor (15) du générateur électrique précité (13) ; d'une valeur substantielle allant de 0,075 Kg·m$^2$ à 0,092 Kg·m$^2$ et de préférence égale à 0,0836 Kg·m$^2$; et les moyens de transmission mécanique (14) comprennent une unité d'embrayage (16) et une transmission (17).

**2.** Le générateur de moteur, conformément à la revendication 1, caractérisé dans le moteur à combustion interne précité (11) possède une irrégularité cyclique substantiellement égale à 0,032, avec une vitesse de rotation substantiellement égale à 3 000 rpm.

3. Le générateur de moteur conformément à toute revendication précitée, caractérisé dans le moteur à combustion interne précité (11), possède un rapport entre la course du piston et l'alésage substantiellement égal à 1.

4. Le générateur de moteur conformément à toute revendication précitée, caractérisé dans le moteur à combustion interne précité (11), possède un pourcentage de rapport de recouvrement substantiellement inférieur à 5 %.

5. Le générateur de moteur conformément à toute revendication précitée, caractérisé dans le moteur à combustion interne précité (11), possède une cylindrée allant de 400 cc à 500 cc.

6. Le générateur de moteur conformément à toute revendication précitée, est **caractérisé par** le rapport entre le moment d'inertie polaire de l'arbre de transmission (12) du moteur à combustion précité et la cylindrée du moteur à combustion interne précité (11) est substantiellement égale à 0,0056 kg m2/l.

7. Le générateur de moteur conformément à toute revendication précitée, est **caractérisé par** un moment d'inertie polaire total substantiellement égal à 0,0836 kg·m$^2$.

8. Le générateur de moteur (10), conformément à toute revendication précitée, caractérisé dans l'unité d'embrayage précitée (16), est fourni avec :

   - un plateau d'entraînement (19) monté sur une extrémité (18) de l'arbre de transmission précité (12) et susceptible de glisser le long de cette extrémité (18) le long de l'axe de rotation (A) de l'arbre de transmission (12),
   - un plateau récepteur (20) monté à l'extrémité (18) de l'arbre de transmission précité (12) face au plateau d'entraînement (19), susceptible de tourner autour de l'arbre de transmission (12) et mécaniquement relié au rotor (15) du générateur électrique précité (14) afin de transmettre le couple d'entraînement,
   - l'activation signifie (21) agir mécaniquement sur le plateau d'entraînement précité (19) afin d'opérer le glissement de celui-ci le long de l'extrémité (18) de l'arbre de transmission précité (12) entre une première position dans laquelle le plateau d'entraînement (19) est couplé au plateau récepteur (20), effectuant la rotation intégrale de celui-ci autour de l'axe de rotation (A) ;

et
une deuxième position dans laquelle le plateau d'entraînement (19) est éloigné du plateau récepteur (20), afin de permettre la rotation libre de ces deux éléments.

**Fig. 1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6405701 A
- US 6405701 B

- GB 2328476 A